(19) Europäisches Patentamt
European Patent Office
Office européen des brevets

(11) Veröffentlichungsnummer: **0 178 525 B1**

(12) **EUROPÄISCHE PATENTSCHRIFT**

(45) Veröffentlichungstag der Patentschrift: **03.10.90**

(51) Int. Cl.⁵: **C 08 G 18/46, C 08 G 18/50**

(21) Anmeldenummer: **85112384.4**

(22) Anmeldetag: **01.10.85**

(54) **Verfahren zur Herstellung höhermolekularer Aminoverbindungen mit vermindertem Monomeramingehalt, sowie deren Verwendung.**

(30) Priorität: **13.10.84 DE 3437632**

(43) Veröffentlichungstag der Anmeldung:
**23.04.86 Patentblatt 86/17**

(45) Bekanntmachung des Hinweises auf die
Patenterteilung:
**03.10.90 Patentblatt 90/40**

(84) Benannte Vertragsstaaten:
**BE DE FR GB IT NL**

(56) Entgegenhaltungen:
**EP-A-0 113 027**

(73) Patentinhaber: **BAYER AG**
**D-5090 Leverkusen 1 Bayerwerk (DE)**

(72) Erfinder: **Rasshofer, Werner, Dr.**
**Leopold-Gmelin-Strasse 31**
**D-5000 Koeln 80 (DE)**
Erfinder: **Grigat, Ernst, Prof. Dr.**
**Am Domblick 13**
**D-5090 Leverkusen 3 (DE)**
Erfinder: **Grögler, Gerhard, Dr.**
**Von Diergardtstrasse 46**
**D-5090 Leverkusen 1 (DE)**
Erfinder: **Hess, Heinrich, Dr.**
**Körnerstrasse 5**
**D-5090 Leverkusen 1 (DE)**
Erfinder: **Kopp, Richard, Dr.**
**Bilharzstrasse 15**
**D-5000 Koeln 80 (DE)**

**Die Akte enthält technische Angaben, die nach
dem Eingang der Anmeldung eingereicht
wurden und die nicht in dieser Patentschrift
enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung höhermolekularer Aminoverbindungen, insbesondere di- und/oder höherfunktioneller Aminoverbindungen mit aromatischen Endgruppen, welche frei von oder in ihrem Gehalt an niedermolekularen Aminoverbindungen stark reduziert sind.

Weiterer Erfindungsgegenstand ist die Verwendung der nach dem erfingungsgemäßen Verfahren erhaltenen, modifizierten höhermolekularen Aminoverbindungen als höhermolekulare Verbindungen bei der Synthese von Polyurethankunststoffen.

Höhermolekulare Aminogruppen aufweisende Verbindungen, wie sie beispielsweise durch Hydrolyse der entsprechenden NCO-Gruppen aufweisenden NCO-Prepolymeren durch Umwandlung einer NCO- in eine NH$_2$-Gruppe erhalten werden, sind wertvolle Ausgangsmaterialien zur Herstellung von Poly(harnstoff)urethanen, als modifizierende Epoxidvernetzer und für andere Diaminverwendungen. Besonders geeignet sind hierbei die Aminogruppen aufweisenden Verbindungen, wie sie durch bevorzugt alkalische Hydrolyse der NCO-Gruppen der NCO-Prepolymeren, die durch Umsetzung von Polyisocyanaten, insbesondere aromatischen und/oder auch (cyclo)aliphatischen Diisocyanaten wie z.B. Toluylendiisocyanat, Diphenylmethandiisocyanat oder Isophorondiisocyanat, mit zwei oder drei Hydroxylgruppen aufweisenden Polyetherpolyolen oder Polyesterpolyolen (einschließlich Polylactonesterdiolen oder Polycarbonatdiolen) in NCO/OH-Verhältnissen > 1, bevorzugt 1,8:1 bis 2,5:1, erhalten werden, entstehen. Solche sogenannten NCO-Prepolymere enthalten in der Regel, abhängig von der Art inhrer Herstellung noch gewisse Anteile monomerer, niedermolekularer Polyisocyanate, z.B. Toluylen-2,4-diisocyanat (TDI), die bei der Herstellung der höhermolekularen Aminoverbindungen, der sogenannten Aminopolyether oder Aminopolyester, dabei in monomere, niedermolekulare Amine, z.B. 2,4-Toluylendiamin (TDA), übergehen. Deren Menge ist abhängig von der Menge an freiem, monomerem Polyisocyanat in der Vorläuferbindung, z.B. im NCO-Prepolymer, aber gegebenenfalls auch von der Art der Reaktionsführung und der Aufarbeitung bei der Herstellung derselben.

Eine Möglichkeit, niedermolekulares monomeres Amin (z.B. TDA) in den sogenannten Aminopolyethern oder Aminopolyestern zu vermeiden oder sehr gering zu halten, besteht beispielsweise darin, in den entsprechenden NCO-Prepolymeren den Gehalt an monomerem, niedermolekularem Isocyanat (z.B. TDI) gering zu halten. Dies kann z.B. dadurch geschehen, daß zunächst die NCO-Prepolymerisierung mit einem NCO:OH-Verhältnis von größer 2:1, z.B. 5:1 bis 20:1, vorgenommen und dann der Überschuß an monomerem (Di)Isocyanat, z.B. mit Hilfe eines sogenannten Dünnschichtverdampfers, abdestilliert wird. So kommt man beispielsweise auf Monomerkonzentrationen von weniger als 0,5 Gew.-% an monomeren Diisocyanat. Nachteilig sind hierbei aber die Kosten für die Dünnschichtdestillation entsprechender NCO-Prepolymere.

Ein anderes Verfahren verwendet bei der Prepolymerisierung NCO/OH-Verhältnisse von kleiner 2:1, z.B. ca.

1,75 bis 1,95, d.h. einen Unterschuß an Ausgangsdiisocyanat, bezogen auf ein "ideales" NCO-Prepolymer (NCO/OH-Verhältnis 2:1), wodurch — bei Inkaufnahme einer gewissen Vorverlängerung des NCO-Prepolymeren — ein monomerärmeres Produkt erhalten wird. Nachteilig ist hierbei, daß sowohl das NCO-Prepolymer als auch das aminische Umwandlungsprodukt hieraus erhöhte Viskositäten besitzen, was zu erschwerter Verarbeitbarkeit führt.

Die Entfernung von monomerem Amin, insbesondere aromatischen Diaminen, aus den sogenannten höhermolekularen Aminopolyethern oder Aminopolyestern ist jedoch aus mehreren Gründen sinnvoll und wünschenswert:

Im wesentlichen

1. um die Grenzwerte, die der Gesetzgeber für die Konzentration niedermolekularer, insbesondere aromatischer Amine gegeben hat, zu unterschreiten,

2. um den negativen Einfluß freier, aromatischer, niedermolekularer Amine auf die Lichtstabilität der Aminopolyether oder -ester, bzw. der damit hergestellten Zubereitungen auszuschalten,

3. um mit den Monomergehalten schwankende Eigenschaften in den mit Polyaminen aufgebauten Polyurethanharnstoffen zu vermeiden und

4. um die Lichtstabilität und Verfärbungsstabilität in den daraus hergestellten PU-Kunststoffen zu erhöhen.

Es war also Aufgabe der vorliegenden Erfindung, ein Verfahren zur Verfügung zu stellen, einfach und billig aus einem Gemisch aus höhemolekularen Aminverbindungen und niedermolekularen Aminverbindungen diese niedermolekularen Aminverbindungen zumindest teilweise oder praktisch vollständig zu entfernen.

Überraschenderweise wurde gefunden, daß der Gehalt an nidermolekularen Aminen in solchen Gemischen drastisch, z.B. unter die nach 1. geforderten Grenzwerte, gesenkt werden kann, wenn geringe Mengen an Isocyanatverbindungen, insbesondere aliphatischen Isocyanatverbindungen, mit einem solchen Gemisch vereinigt werden.

Gegenstand der Erfindung ist somit ein Verfahren zur Herstellung von höhermolekularen Aminoverbindungen, welche frei von niedermolekularen Aminoverbindungen oder in ihrem Gehalt daran stark reduziert sind, dadurch gekennzeichnet, daß man Gemische aus

a) höhermolekularen Aminoverbindungen mit endständigen aromatischen und/oder aliphatischen Aminogruppen, mit Molekulargewichten von 400 bis 12 000, vorzugsweise 600—6000, vorzugsweise di -und/oder höherfunktionellen Aminoverbindungen mit endständigen aromatischen primären Aminogruppen, insbesondere höher molekularen Aminopolyethern oder Aminopolyestern mit aromatischen Endgruppen und mit Molekulargewichten von 600 bis 6000, die durch alkalische Hydrolyse von NCO-Polyether -oder -Polyester -Prepolymeren erhalten würden, und

b) darin als Nebenprodukt oder Verunreinigung in geringen Mengen enthaltenen niedermolekularen Aminoverbindungen mit Molekulargewichten unter 400 vorzugsweise aromatischen Aminoverbindungen, insbes. (aromatischen) Diaminen mit

c) Mono-, Di und/oder Polyisocyanaten in einer solchen Menge umsetzt, daß für jedes Äquivalent an niedermolekularer Aminoverbindung b) 0.5 bis 5 Äquivalente an Isocyanaten c) eingesetzt werden.

Man geht so vor, daß das vorliegende Gemisch aus höhermolekularen Aminoverbindungen a) und niedermolekularen, monomeren Aminoverbindungen b), die es aus dem Gemisch zu entfernen gilt, mit den Isocyanaten c) vermischt wird. Dabei wird in der Regel die in geringerer Menge verwendete Komponente mit der in größerer Menge verwendeten Komponente, bevorzugt unter Rühren, vereinigt. Bevorzugt wird also das Isocyanat zum vorgelegten Gemisch aus a) + b) unter Rühren zugegeben und 1 Minute bis 24 Stunden nachgerührt. Das verwendete Isocyanat kann dabei in einem NCO-inerten Lösungsmittel gelöst sein, dies ist jedoch weniger bevorzugt.

Nach der Vermischung und einer mehrstündigen Rühr- oder Standzeit ist das Verfahren beendet, eine Aufarbeitung ist im allgemeinen unnötig; gegebenenfalls kann eine Filtration evtl. ausgeschiedener Feststoffe erfolgen, doch werden die Isocyanate c) vorzugsweise so gewählt, daß die keine Ausscheidungen unlöslicher Harnstoffe innerhalb der höhermolekularen Aminoverbindungen a) ergeben.

Die Menge des zugesetzten Isocyanats c) richtet sich nach der Menge des abzufangenden, niedermolekularen Amins b). Dabei ist zu beachten, daß die Menge an Isocyanatäquivalenten auch größer als die an Aminäquivalenten im niedermolekularen Amin sein kann, insbesondere bei kleinen und sehr kleinen Aminmengen, die in Harnstoffverbindungen umzuwandeln sind, und insbesondere dann, wenn Diisocyanate c) eingesetzt werden.

Für jedes Äquivalent niedermolekulares, monomeres Amin b), das es aus dem Gemisch zu entfernen gilt, werden zu dessen vollständiger, nahezu vollständiger oder zumindest überwiegender Entfernung 0,5 bis 5 Äquivalente NCO-Gruppen verwendet. Vorzugsweise verwendet man 0,8 bis 5 und insbesondere etwa äquivalente Mengen, d.h. etwa 0,95 bis 1,1 Äquivalente NCO in Form der Isocyanate c). Verwendet man eine größere Menge an Isocyanat als der äquivalenten Menge, dann werden in zunehmendem Maße auch Aminogruppen der höhermolekularen Aminoverbindung a) umgesetzt. Dies kann gleichzeitig Absicht des erfindungsgemäßen Verfahrens sein, wenn besondere Absichten damit verbunden sind, wie z.B. eine Vorverlängerung der höhermolekularen Aminverbindungen.

Die Isocyanate c) werden weiterhin bevorzugt in solchen Mengen und solcher Art eingesetzt, daß das Reaktionsgemisch an Aminen und Isocyanaten keine Ausfällungen zeigt, sondern klar bleibt, wie dies im Regelfall vorliet. Zum Erzielen besonderer Effekte können natürlich auch unlösliche Harnstoffprodukte bewußt erzeugt werden.

Die Temperatur, bei der die Vermischung der Komponenten a), b) und c) erfolgt, richtet sich nach der Viskosität der in der größeren Menge verwendeten Komponente, also im Regelfall nach der höhermolekularen Aminkomponente a), die in flüssiger (oder gelöster) Form vorliegen soll. Die Temperatur sollte möglichst niedrig sein und im Bereich von −20 bis ca. +80°C liegen. Bei sehr hochviskosen Aminen a), z.B. Aminopolyestern, die zum Teil sogar kristallin anfallen können, wird man gegebenenfalls den oberen Temperaturbereich sogar überschreiten, z.B. kurzfristig auf ca. 120°C erhitzen.

Überraschenderweise hat sich gezeigt, daß — wie in den Beispielen näher demonstriert werden wird — das zugesetzte Isocyanat weitgehend — und in den bevorzugten Ausführungsformen praktisch ausschließlich — mit den niedermolekularen Aminoverbindungen b) zu reagieren vermag. Dadurch besteht jetzt die Möglichkeit, aus nicht den Lehren des Srandes der Technik entsprechenden Verfahren zur Monomerenverminderung vorbehandelten NCO-Prepolymeren nunmehr Aminopolyether oder andere höhermolekulare Polyaminoverbindungen herzustellen, die keinen signifikanten Anteil an monomerem Amin mehr aufweisen. Durch die Verminderung des Gehaltes an freien (Di)Aminen, insbesondere aromatischen (Di)Aminen, werden die entsprechenden höhermolekularen Polyamine breit und vorteilhaft einsetzbar. Überraschenderweise hat sich darüber hinaus gezeigt, daß auch nach anderen Methoden als der Verseifung von NCO-Prepolymeren hergestellte, höhermolekulare Aminoverbindungen, die Beimengungen von monomeren, niedermolekularen Aminen enthalten, auf diese erfindungsgemäße Weise von ihrem Monomeramingehalt befreit werden können.

Das Gemisch aus a) und b) ist im allgemeinen aus 90 bis 99,95 Gew.-Teilen a) und 10 bis 0,05 Gew.-Teilen b), vorzugsweise 95 bis 99,9 Gew.-Teilen a) und 5 bis 0,1 Gew.-Teilen b), insbesondere 97 bis 99,7 Gew.-Teilen a) und 3 bis 0,3 Gew.-Teilen b) zusammengesetzt.

Prinzipiell kommen als Isocyanate c) für das vorliegende Verfahren alle organischen Isocyanate mit mindestens einer NCO-Gruppe in Frage, d.h. Mono-, Di und gegebenenfalls höherfunktionnelle, aromatische und/oder aliphatische Isocyanate, sei es in monomerer Form oder auch in einer der vielen bekannten, nieder und/oder höhermolekularen Modifikationen, die dem Fachmann vertraut sind, z.B. in Form von NCO-prepolymeren mit Urethangruppen.

3

Zu verwenden sind also z.B. organische Polyisocyanate der Formel R(NCO)$_n$, worin R mehrwertige, gegebenenfalls urethan-, biuret- und/oder isocyanuratgruppenhaltige aliphatische oder cycloaliphatische Reste oder gemischte Reste dieser Art und n eine ganz Zahl bedeuten, deren Wert der Valenzzahl von R entspricht und wenigstens 2, vorzugsweise 2 bis 3 beträgt. Im einzelnen seien beispielhaft genannt: aliphatische Diisocyanate, wie Ethylendiisocyanat, Propylen-1,2-diisocyanat, Butylen-1,4-diisocyanat, 2,2,4-Trimethylhexamethylen-1,6-diisocyanat und vorzugsweise Hexamethylen-1,6-diisocyanat, cycloaliphatische Diisocyanate, wie Cyclohexan-1,2-, -1,3- und/oder -1,4-diisocyanat, 1-Methylcyclohexan-2,4- und/oder -2,6-diisocyanat sowie die entsprechenden Isomerengemische, 4,4'-, 2,4'- und 2,2'-Dicyclohexylmethan-diisocyanat sowie die entsprechenden Isomerengemische und vorzugsweise 3-Isocyanatomethyl-3,5,5-trimethylcyclohexylisocyanat (Isophoron-diisocyanat) und Polyisocyanate, wie Polycyclohexyl-polymethylen-polyisocyanate mit 2 bis 6, vorzugsweise 3 Cyclohexylenresten im Molekül.

Ferner sind geeignet:
α,α'-Dimethyl-p-xylylen-diisocyanat, α,α,α',α'-Tetramethyl-m-xylylen-diisocyanat, α,α,α,α'-Tetramethyl-p-xylylen-diisocyanat, α-Methyl-, α,α'-di-methyl-m-xylylen-diisocyanat, Bis-[4-(1-isocyanato-1-methyl-ethyl)-phenyl]methan, α-Ethyl-α'-methyl-p--xylylen-diisocyanat, 2,6-Bis-(1-isocyanato-1-methyl-ethyl-naphthalin, 1,4-Bis-(1-isocyanato-1-methyl-ethyl)-cyclohexan, 1,3-Bis-(1-isocyanato-1-Methylethyl)-cyclohexan, 1,8-Diisocyanato-p-menthan, ferner z.B. 3- bzw. (4), 8- bzw. (9)-Bis-(isocyanatomethyl)-tricyclo-[5,2,1,0]-decan-Isomere.

In Betracht kommen ferner isocyanurat-, biuret- und insbesondere urethangruppenhaltige Polyisocyanate sowie deren Gemische, hergestellt auf Basis aliphatischer oder cycloaliphatischer Diisocyanate. Die Herstellung isocyanuratgruppenhaltiger Polyisocyanate, die vorzugsweise NCO-Gehalte von 15 bis 30 Gew.-% besitzen, wird, u.a. beschrieben in den DE—PS 10 22 789, 12 22 067 und 10 27 394 sowie den DE—OS 19 29 034 und 20 04 048. Biuretgruppenhaltige Polyisocyanate besitzen NCO-Gehalte von 30 bis 15, vorzugsweise von 25 bis 20 Gew.-% und Viskositäten von 6000 bis 500, vorzugsweise von 4000 bis 1000 mPas bei 20°C und werden beispielsweise beschrieben in der DE—PS 11 01 394 und der DE—OS 22 61 065. Urethangruppenhaltige Polyisocyanate können beispielsweise erhalten werden durch Umsetzung der obengenannten aliphatischen oder cycloaliphatischen Diisocyanate, vorzugsweise durch Umsetzung von Hexamethylendiisocyanat und Isophorondiisocyanat mit gegebenenfalls substituierten oder modifizierten Alkandiolen mit 2 bis 10, vorzugsweise 2 bis 6 Kohlenstoffatomen im Alkylenrest, wie Ethylenglykol, Butandiol-1,4, Dipropylenglykol, Hexandiol-1,6 und Neopentylglykol, sowie Hydroxypivalinsäureneopentylglykol oder deren Gemische, im Molverhaltnis von ungefähr 2:1.

Bevorzugt werden für das erfindungsgemäße Verfahren aliphatische Isocyanate, bzw. NCO-Gruppen aufweisende Derivate aus diesen aliphatischen Mono-, Di- und/oder Polyisocyanaten. Dabei sind unmodifizierte, also in reiner Form vorliegende, aliphatische (inclusive cycloaliphatische) Monoisocyanate und die (cyclo)aliphatischen Diisocyanate bevorzugt. Besonders bevorzugt sind (cyclo)aliphatische Mono- und Diisocyanate, bei denen die NCO-Gruppen an sekundären oder tertiären Atomen stehen.

Als bevorzugte Vertreter seien Monoisocyanate wie n-Propylisocyanat, n-Butylisocyanat, Isobutylisocyanat, n-Hexylisocyanat, 6-Chlor-hexylisocyanat, 2-Ethylhexylisocyanat, Dodecylisocyanat, Tetradecylisocyanat, Stearylisocyanat, Cetylisocyanat, Allylisocyanat, ganz besonders bevorzugt aber Isopropyl-isocyanat, sec.-Butylisocyanat, tert.-Butylisocyanat, tert.-Pentylisocyanat und Diisocyanate wie Hexandiisocyanat und Isophorondiisocyanat genannt. Polyisocyanate mit mehr als zwei NCO-Gruppen sind alleine weniger bevorzugt, da sie die Viskosität der höhermolekularen Polyamine zumeist stärker erhöhen; sie werden daher bevorzugt nur anteilsweise neben Mono- und Diisocyanaten eingesetzt.

Die Gemische aus höhermolekularen Aminoverbindungen a), welche von ihrer Hertellungsweise her niedermolekulare Aminoverbindungen b) enthalten, lassen sich nach einer Vielzahl von Verfahren herstellen.

So wird in der DE—B 1 270 046 ein Verfahren zur Herstellung definierter, Polyalkylenglykolether-Segmente enthaltender, primärer aromatischer Amine beschrieben, bei dem man Umsetzungsprodukte von aromatischen Di- oder Triisocyanaten mit Polyalkylenglykolethern und/oder Polyalkylenglykolthioethern, vorzugsweise solchen mit Molekulargewichten zwischen 400 und 4000, mit sekundären oder tertiären Carbinolen umsetzt und diese Umsetzungsprodukte anschließend (gegebenenfalls in Gegenwart säurer Katalysatoren) in einem inerten Lösungsmittel einer thermischen Spaltung bei hohen Temperaturen unterwirft. Bei diesem Verfahren werden noch vorhandene Di- oder Triisocyanate via Carbinoladdukte in die entsprechenden freien Amine überführt.

Gegenstand der DE—B 1 694 152 ist die Herstellung von mindestens 2 endständige Aminogruppen aufweisenden Prepolymeren durch Umsetzung von überschüssigen Mengen an Hydrazin, Aminophenylethylamin oder anderen Diaminen mit einem NCO-Prepolymer aus einem Polyetherpolyol und Polyisocyanat (NCO:OH-Verhältnis = 1:1,5 bis 1:5). Nicht umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der FR—PS 1 415 317 beschrieben. Urethangruppenhaltige NCO-Prepolymere werden mit Ameisensäure in die N-Formylderivate überführt, die zu endständigen aromatischen Aminen verseift werden.

4

Auch die Reaktion von NCO-Propolymeren mit Sulfaminsäure gemäß DE—B 1 155 907 führt zu Verbindungen mit endständigen Aminogruppen.

Bei beiden Verfahren werden in den NCO-Prepolymeren anwesende monomere Polyisocyanate in die entsprechenden Amine überführt.

Desweiteren werden höhermolekulare, aliphatische, sekundäre und primäre Aminogruppen aufweisende Voraddukte nach DE—B 1 215 373 durch Umsetzung höhermolekularer Hydroxylverbindungen mit Ammoniak in Gegenwart von Katalysatoren unter Druck bei hohen Temperaturen erhalten oder sind gemäß US—PS 3 044 989 oder DE—B 1 193 671 durch Umsetzung höhermolekularer Polyhydroxylverbindungen mit Acrylnitril unter anschließender katalytischer Hydrierung zugänglich. Polyoxyalkylenpolyamine sind gemäß US—PS 3 236 895 auch durch Aminierung mittels Ammoniak via Sulfonsäureestern von Polypropylenglykol zugänglich. Auch die Umsetzung von einem Polyalkylenglykol mit Epichlorhydrin und nachfolgender Reaktion mit einem Überschuß eines primären Amins nach FR—PS 1 466 708 zu sekundäre Aminogruppen aufweisenden Prokuten ist bekannt. Auch durch Umsetzung von NCO-Prepolymeren mit Hydroxylgruppen aufweisenden Enaminen, Aldiminen oder Ketiminen und anschließende Hydrolyse erhält man gemäß DE—A 2 546 536 bzw. US—PS 3 865 791 höhermolekulare, endständige Aminogruppen und Urethangruppen aufweisende Verbindungen. Eine weitere Synthesemoglichkeit für Urethan- und Ethergruppen aufweisende aromatische Polyamine liegt in der bei der Reaktion von Isatosäureanhydrid und Diolen eintretenden Ringöffnung. Solche Polyamine sind z.B. in der US—PS 4 180 644 und den DE—A 2 019 432, 2 619 840, 2 648 774 und 2 648 825 beschrieben.

Auch die Reaktion von Nitroarylisocyanaten mit Polyolen und nachfolgende Reduktion der Nitrogruppen zu aromatischen Amingruppen ist ein möglicher Weg zur Herstellung der Gemische (US—PS 2 888 439).

Auch durch Umsetzung von Benzylalkohol mit NCO-Prepolymeren zu Benzylurethanen und nachfolgender katalysierter Hydrogenanalyse lassen sich Polyamine herstellen (DE—A 30 35 639). Nachteilig bei diesen beiden Verfahren sind vor allem die hohen Kosten des unter Druck auszuführenden Reduktionsschrittes.

Ohne daß jede beschriebene Methode zur Herstellung von Aminoverbindungen im einzelnen beschrieben werden soll, ist es dem Fachmann doch klar, daß bei jeder dieser Methoden freies, monomeres Amin anfallen kann, dessen Beseitigung sehr erwünscht wäre.

Bevorzugt werden als aminische Komponenten a/b Gemische zugrundegelegt, wie sie gemäß den Verfahren nach DE—OS 29 48 419, 30 39 600, 31 12 118, 31 31 252, 32 00 021, 31 44 991, 31 44 874, 32 23 395 oder 32 23 400 durch alkalische Hydrolyse (z.B. mittels Kalilauge) von NCO-Prepolymeren (aus im wesentlichen höhermolekularen Polyhydroxylverbindungen und überschüssigen Polyisocyanaten) nach den geschilderten Hydrolyse- und Aufarbeitungsverfahren als höhermolekulare Polyamin(gemisch)e erhalten werden.

Die geeigneten Ausgangsmaterialien wie höhermolekulare Polyetherpolyole, Polyesterpolyole, Polycarbonatpolyole, gegebenenfalls mitzuverwendende niedermolekulare Polyole und die Polyisocyanate, sowie die Verfahren zur Umwandlung in Polyamine werden in den angeführten Patentschriften ausführlich beschrieben und können auch hier zur Herstellung der Gemische der Polyaminoverbindungen (a + b) benutzt werden.

Besonders bevorzugt sind Hydrolyseprodukte von NCO-Prepolymeren aus höhermolekularen Polyetherpolyolen, vorzugsweise auf Propylenoxid- und/oder Ethylenoxid-Basis basierenden Polyetherpolyolen einerseits und aromatischen Diisocyanaten, insbesondere Toluylen-2,4-diisocyanat, andererseits. Besonders bevorzugt wird das Verfahren der thermischen Zerlegung alkalisch gebildeter Carbamate nach DE—OS 31 32 252 für die Herstellung der Verbindungen a) angewendet.

Nach dem erfindungsgemäßen Verfahren werden Gemische aus

a) höhermolekularen Aminoverbindungen, vorzugsweise mit endständigen aromatischen Aminogruppen und

b) niedermolekularen Aminoverbindungen, welche der Herstellung der höhermolekularen Aminoverbindungen entstammen, mit durch die Reaktion von b) mit den Isocyanaten c) erheblich reduzierten Gehalten an niedermolekularen Aminoverbindungen b) erhalten, wobei sich aus b) und c) entsprechende Mengen an Harnstoffverbindungen d) bilden, welche vorzugsweise in dem erfindungsgemäß modifizerten Gemisch gelöst bleiben.

Die niedermolekularen Aminoverbindungen b) können dabei z.B. die aus den Di- und/oder Polyisocyanaten, welche bei der NCO-Prepolymerbildung als freie, monomere Di- oder Polyisocyanate vorliegen, durch Hydrolyse anfallenden Di- und/oder Polyamine sein. Es können jedoch auch andere aminische Verbindungen sein, wie sie als solche bei der Herstellung der höhermolekularen Aminoverbindungen a) als Ausgangsmaterialien oder als Vorläuferverbindungen (Zwischenprodukte) bei der Herstellung anfallen. Beispielsweise kann es sich bei er Umsetzung von NCO-Prepolymeren mit Nitroanilinen und nachfolgender Reduktion um Reste nicht umgesetzter Nitroaniline oder um durch Reduktion daraus angefallener para- Phenylendiamine handeln. In ähnlicher Weise können andere aminische Ausgangs- oder bei der Herstellung von a) als Nebenprodukte entstandene oder bei der Lagerung entstehende, niedermolekulare Aminoverbindungen b) vorliegen und der Umsetzung mit den Isocyanaten c) unterworfen werden, um sie aus a) zu reduzieren oder zu entfernen, bzw. ihren Gehalt zumindest drastisch unter ein störendes Niveau zu senken.

Die entstehenden Harnstoffverbindungen d) sind beispielsweise bie Verwendung von Monoisocyanaten c) die Mono- oder Bisharnstoffe der Diamine oder beispielsweise der Harnstoff der Nitraniline. Bei Diisocyanaten c) können mit Monoaminen entsprechende Mono- oder Bisharnstoffe, mit Diaminen oligomere oder polymere Harnstoffe entstehen, die gegebenenfalls sogar mit den höhermolekularen Aminen a) in untergeordneten Mengen verknüpft seine können. Die entstandenen Harnstoffverbindungen d) sind im allgemeinen nicht mehr flüchtig.

Es war überraschend, daß so bevorzugt die niedermolekularen Aminoverbindungen b) vor den in erheblich größerer Menge im Gemisch vorliegenden höhermolekularen Aminoverbindungen a) mit den Isocyanaten c) reagieren und von störenden Mengen an niedermolekularen Aminen b) befreite, höhermolekulare Aminoverbindungen a) ergeben, die vorteilhafte Eigenschaften aufweisen und sich vorteilhaft zu hochmolekularen Polyurethanen umsetzen lassen.

Zur erfindungsgemäßen Modifizierungsreaktion wird vorteilhaft der Gehalt an niedermolekularen Aminoverbindungen b) vorher analytisch bestimmt, um geeignete Mengen an Isocyanaten c) einsetzen zu können.

Die nach dem erfindungsgemäßen Verfahren von ihren niedermolekularen Beglietaminen b) befreiten oder reduzierten, höhermolekulen Polyaminoverbindungen bzw. Polyaminoverbindungsgemische stellen im allgemeinen farblose bis schwach gefärbte, viskose, bzw. gegebenenfalls relativ niedrigschmelzende (vorzugsweise unterhalb 60° schmelzende) Produkte dar. Durch Reduzierung des niedermolekularen Amingehalts b) sind sie praktisch geruchsfrei und sind physiologisch unbedenklich für Polyisocyanat-Polyadditionsverfahren zur Herstellung von Polyurethankunststoffen einzusetzen.

Der Amingehalt der erfindungsgemäß modifizierten, höhermolekularen Amine liegt im allgemeinen zwischen 0,2 bis 12 Gew.-%, bevorzugt 0,3 bis 10 Gew.-% und besonders bevorzugt zwischen 0,5 bis 6 Gew.-%.

Die Verwendung der nach den erfindungsgemäßen Verfahren erhaltenen, in ihrem Gehalt an niedermolekularen Aminoverbindungen befreiten oder erheblich reduzierten, höhermolekularen Polyamine, welche vorzugsweise aromatische Aminogruppen besitzen, zur Herstellung von gegebenenfalls zelligen Polyurethankunststoffen oder PU-Schaumstoffen nach an sich bekannten Verfahren aus höhermolekularen, di- und/oder mehrfunktionellen Verbindungen mit gegenüber NCO reaktiven Gruppen mit reaktiven Wasserstoffatomen und Molekulargewichten von 400 bis 12000, vorzugsweise 60 bis 6000, gegebenenfalls niedermolekularen Kettenverlängerungsmitteln und/oder Vernetzern mit Mole-kulargewichten von 18, 32 und/oder 60 bis 399, Di- bzw. Polyisocyanaten, gegebenenfalls unter Zusatz üblicher Hilfs- und Zusatzstoffe, dadurch gekennzeichnet, daß man die erfindungsgemäß hergestellten, höhermolekularen Polyamine als alleinige oder anteilige höhermolekulare Verbindungen einsetzt, ist ein weiterer Gegenstand der Erfindung.

Geeignete Ausgangskomponenten für die Herstellung von Polyurethankunststoffen werden oben im Zusammenhang mit der Prepolymerherstellung bzw. auch in DE—A 2 302 564, DE—A 2 432 764 (US—PS 3 903 679) sowie in den DE—A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwende Hilfs- und Zusatzstoffe.

Ein weiterer, bevorzugter Verwendungszweck der erfindungsgemäß modifizierten Polyamine stellt ihre Verwendung als reaktive Komponenten in Einkomponenten-Reaktivsystemem unter Verwendung von festen Diisocyanaten bzw. Diisocyanaten mit retardierter Reaktivität, entsprechend DE—OS 32 30 757, 34 03 500, 34 03 499, 34 03 497, 34 18 430 bzw. EP—A 62780 dar.

Weitere Verwendungszwecke der erfindungsgemäß hergestellten Polyamine sind z.B. Kupplungskomponenten für Diazofarbstoffe, Härter für Epoxid- und Phenolharze, sowie alle anderen an sich bekannten Reaktionen von Aminen wie Amid- oder Imidbildung und andere Aminreaktionen.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

Beispiel

Beispiel 1—3
In den Beispielen 1 bis 3 werden verschiedene Chargen eines Aminopolyethers, die Aminopolyether I, II und III eingesetzt (siehe Herstellungsbeschreibung).

Herstellung der höhermolekularen, aromatischen Aminopolyether (nach dem Verfahren gemäß DE—OS 31 31 257)
1 Mol eines linearen Polypropylenetherglykols der OH-Zahl 56 und 2 Mol Toluylen-2,4-diisocyanat werden durch 4-stündiges Erhitzen auf 80°C in ein NCO-Prepolymer (3,58% NCO) überführt. 810 g des 45°C warmen NCO-Prepolymers werden unter intensivem Rührem so zu einer gekühlten Lösung von 52,2 g Kaliumhydroxid und 500 ml Wasser und 300 ml Aceton gegeben (NCO:OH$^\ominus$-Verhältnis = 1:1,35), daß eine Innentemperatur von 25°C nicht überschritten wird. 30 Minuten wird bei dieser Temperatur weitergerührt und dann 2 Stunden zum Rückfluß erhitzt. Nach 30-minütigem Stehen wird die untere, wäßrige Salzlösung aus dem zweiphasigen Reaktionsgemisch abgetrennt und verworfen. Die obere Phase wird bei 20 mbar/80°C und dann bei 1 mbar/100°C von Wasser- und Acetonresten befreit. Durch Absaugen des 60°C warmen

6

Produkts über eine Drucknutsche (3 bar Überdruck) werden geringe Reste Salz abgetrennt und das Polyetheramin isoliert. Der Versuch wurde dreimal wiederholt, wobie die Polyetheraminchargen I, II und III mit einer üblichen Streuung der Eigenschaften (NH-Zahl bzw. Gehalt an freiem 2,4-Toluylendiamin (TDA)) erhalten wurden.

Dazu wurden bei 25°C in den drei Beispielen 1—3 jeweils 100 g Aminopolyether mit zunehmenden Mengen an Isocyanat (im Beispiel 1 bzw. 2: Isopropylisocyanat; in Beispiel 3: Hexamethylendiisocyanat verrührt und 24 Stunden stehengelassen. Von allen Proben wurden danach NH-Zahlen (Perchlorsäure/ Eisessig-Titration), Viskositäten und Gehalte an monomerem Toluylen-2,4-diamin (TDA) mittels der Hockdruckflüssigkeitschromatographie (HPLC) bestimmt und mit den Daten der nicht erfindungsgemäß modifizierten Aminopolyether verglichen.

Die Ergebnisse sind in den Tabellen 1 bis 3 zusammengefaßt. Dabei werden in den Spalten 1 bis 11 folgende Daten und Werte angegeben:

Gemessene NH-Zahl (mg KOH/g) (Spalte 2)

Menge an jeweils zugefügtem aliphatischem Isocyanat und Menge an Isocyanatgruppen (in Gramm) (Spalte 3)

Molmenge an jeweils zugefügtem aliphatischen Isocyanat (Spalte 4)

Angabe der Molmenge an aliphatischem Isocyanat, die jeweils mehr verwendet wurde (Spalte 5)

Aufsummierung der Einzelmengen in Mol an aliphatischem Isocyanat (Spalte 6)

gemessener TDA-Gehalt (Spalte 7)

Umrechnung der gemessenen TDA-Gehalte in Mol-Mengen (Spalte 8)

Angabe, um wieviel Mol TDA die TDA-Konzentration jeweils abnahm (Spalte 9)

Aufsummierung der Abhahmen der TDA-Gehalte (Spalte 10)

Gemessene Viskosität, 1d nach Vermischung (Spalte 11)

Die Auswertungen der in den Tabellen 1 bis 3 zusammengefaßten Daten sind in den Tabellen 4 bis 6 aufgelistet.

Es war Aufgabe, die NCO-Gruppen der zugefügten aliphatischen Isocyanate mit den Aminogruppen der monomeren Polyamine (TDA) und nicht mit den Aminogruppen des Aminopolyethers reagieren zu lassen. Vereinfachend wird zur Deutung der Befunde angenommen, daß im Aminopolyether praktisch ausschließlich Aminogruppen vorliegen, die der 2-Stellung der $NH_2$-Gruppe im 2,4-Toluylendiamin (aus 2,4-Toluylendiisocyanat) entsprechen, und daß unter den Reaktionsbedingungen die 4-Aminogruppe des 2,4-TDA mit den Isocyanatgruppen aus n-Propylisocyanat oder des Hexamethylendiisocyanats bevorzugt reagiert.

Vergleicht man Tabelle 4 mit Tabelle 1, so findet man nach der Versuchs-Nr. gemessene Ausgangs-NH-Zahl, das ist die gemessene NH-Zahl der verwendeten Aminopolyether-Charge; in diesem Fall 49, 15 (mg KOH/g).

Über den per HPLC ermittelten Gehalt an freiem, monomeren TDA—100 (hier 1,464 Gew.-%) läßt sich die anteilige NH-Zahl (hier 11 (mg KOH/g)) berechnen, die von der gefundenen Gesamt-NH-Zahl abzuziehen ist. Dabei wird der auf den Aminopolyether entfallende Anteil der NH-Zahl erhalten (hier 38,15 (mg KOH/g)). Fügt man nun die in Tabelle 1 aufgeführten Mengen an i-Polyisocyanat zu, also 0, 0,3, 0,7, 1,4, 2,8, 5,6 oder 11,2 g, und nimmt an, daß jede NCO-Gruppe eine Aminogruppe abfängt, so erhält man die in der nächsten Spalte aufgeführten, rechnerisch ermittelten NH-Zahlen, der in der folgenden Spalte die tatsächlich gefundenen NH-Zahlen gegenübergestellt werden. Über die nach Isocyanatzugabe bestimmten 2,4-TDA-Gehalte (Tabelle 1, Spalte 7) läßt sich nun der Anteil an TDA und an Aminopolyether an den gefundenen NH-Zahlen, der in den letzten 4 Spalten in abs. Zahlen und in Prozent angegeben ist, ermitteln.

Aus der Tabelle kann man jetzt ablesen, daß bis Versuch 1/4 der Aminopolyether-Anteil an der NH-Zahl praktisch konstant bleibt, daß der prozentuale Anteil der Aminopolyether-Aminogruppen an der Gesamt-NH-Zahl steigt, und daß Isopropylisocyanat weitgehend selektiv mit dem monomeren Diamin und nicht mit dem Aminopolyether reagiert. Fügt man die erhaltene Viskosität noch in diese Betrachtungen mit ein, so erscheint in diesem Beispiel die Zugabe von ca. 1 g i-Propylisocyanat eine akzeptabler Kompromiß:

Verminderung der Gesamt-NH-Zahl um ca. 13%

Verminderung der freien TDA-Menge um ca. 70%

Erhöhung der Viskosität (25°C) um ca. 60%

praktisch keine Funktionalitätsminderung des Aminopolyethers.

Bei den in den Tabellen 2 und 5 bzw. 3 und 6 zusammengefaßten Versuchen 2/1—8 und 3/1—8 läßt sich ein ähnliches Verhalten beobachten.

Tabelle 1  Umsetzung von Aminopolyether (I) (der NH-Zahl 49,15) mit i-Propylisocyanat

Beispiel 1 (Versuche 1/1 bis 1/7)

| Spalte 1 | 2 | 3 | 4 | 5 | 6 | 7 | 8 | 9 | 10 | 11 |
|---|---|---|---|---|---|---|---|---|---|---|
| | | Zugabe an i-Propylisocyanat | | | | | Abnahme an TDA | | | |
| Versuchs-Nr. | Gemisch-NH-Zahl (mg KOH/g) | (g) (g NCO) | (Mol) | (Mol)-Diff. | Σ(Mol) | TDA-Gehalt (Gew.-%) *) | (Mol) | (Mol)-Diff. | Σ(Mol) | Viskosität (25°C) (mPa.s) |
| 1/1 | 49,15 | − | − | | − | 1,464 | 0,012 | | − | 12 500 |
| | | | | 0,00353 | | | | 0,0027 | | |
| 1/2 | 48,4 | 0,3 | 0,00353 | | 0,00353 | 1,134 | 0,0093 | | 0,0027 | 15 000 |
| | | 0,148 | | | | | | | | |
| | | | | 0,00497 | | | | 0,0051 | | |
| 1/3 | 43,5 | 0,7 | 0,0085 | | 0,01203 | 0,509 | 0,0042 | | 0,0078 | 16 500 |
| | | 0,345 | | | | | | | | |
| | | | | 0,008 | | | | 0,00096 | | |
| 1/4 | 41,3 | 1,4 | 0,0165 | | 0,02853 | 0,395 | 0,0032 | | 0,00876 | 22 000 |
| | | 0,691 | | | | | | | | |
| | | | | 0,0165 | | | | 0,00273 | | |
| 1/5 | 32,2 | 2,8 | 0,033 | | 0,06153 | 0,058 | 0,00047 | | 0,01149 | 33 000 |
| | | 1,383 | | | | | | | | |
| | | | | 0,0329 | | | | | | |

*) der TDA-Gehalt wurde durch Hochdruck-Flüssigkeitschromatographie (HPLC) ermittelt

EP 0 178 525 B1

Tabelle 1 Umsetzung von Aminopolyether (I) (der NH-Zahl 49,15) mit i-Propylisocyanat (Fortsetzung)

Beispiel 1 (Versuche 1/1 bis 1/7)

| Spalte 1 | 2 | 3 | 4 | 5 | 6 | 7 | 8 | 9 | 10 | 11 |
|---|---|---|---|---|---|---|---|---|---|---|
| | | | Zugabe an i-Propylisocyanat[1] | | | | | Abnahme an TDA | | |
| Versuchs-Nr. | Gemisch-NH-Zahl (mg KOH/g) | (g) (g NCO) | (Mol) | (Mol)-Diff. | Σ (Mol) | TDA-Gehalt (Gew.-%) *) | (Mol) | (Mol)-Diff. | Σ (Mol) | Viskosität (25°C) (mPa.s) |
| 1/6 | 13,64 | 5,6 | 0,0659 | | 0,12743 | 0 | 0 | | 0,01148 | 91 000 |
| | | 2,767 | | | | | | | | |
| | | | | 0,0641 | | | | | | |
| 1/7 | 4,12 | 11,2 | 0,13 | | 0,25743 | 0 | 0 | | 0,01148 | 110 000 |
| | | 5,534 | | | | | | | | |

*) der TDA-Gehalt wurde durch Hochdruck-Flüssigkeitschromatographie (HPLC) ermittelt

Tabelle 2   Umsetzung von Aminopolyether II (der NH-Zahl 47,28) mit i-Propylisocyanat

Beispiel 2

| Spalte 1 | 2 | 3 | 4 | 5 | 6 | 7 | 8 | 9 | 10 | 11 |
|---|---|---|---|---|---|---|---|---|---|---|
| | | Zugabe an i-Propylisocyanat[1] | | | | | Abnahme an TDA | | | |
| Versuchs-Nr. | Gemisch-NH-Zahl (mg KOH/g) | (g) (g NCO) | (Mol) | (Mol)-Diff. | Σ (Mol) | TDA-Gehalt (Gew.-%) | (Mol) TDA | (Mol)-Diff. | Σ (Mol) | Viskosität (25°C) (mPa.s) |
| 2/1 | 47,28 | – | – | | – | 0,583 | 0,004779 | | | 17 000 |
| | | | | 0,00235 | | | | 0,000591 | | |
| 2/2 | 45,9 | 0,2 0,098 | 0,00235 | | 0,00235 | 0,511 | 0,004188 | | 0,000591 | 17 000 |
| | | | | 0,00235 | | | | 0,000549 | | |
| 2/3 | 44,28 | 0,4 0,196 | 0,00471 | | 0,00706 | 0,444 | 0,003639 | | 0,00114 | 17 000 |
| | | | | 0,00471 | | | | 0,001131 | | |
| 2/4 | 43,7 | 0,8 0,392 | 0,00941 | | 0,01647 | 0,306 | 0,002508 | | 0,002271 | 17 500 |
| | | | | 0,00471 | | | | 0,000935 | | |
| 2/5 | 41,9 | 1,2 0,588 | 0,01411 | | 0,03058 | 0,192 | 0,001573 | | 0,003206 | 19 000 |
| | | | | 0,00941 | | | | 0,000975 | | |

EP 0 178 525 B1

Tabelle 2  Umsetzung von Aminopolyether II (der NH-Zahl 47,28) mit i-Propylisocyanat
(Fortsetzung)

Beispiel 2

| Spalte 1 | 2 | 3 | Zugabe an i-Propylisocyanat | | | 7 | Abnahme an TDA | | | 11 |
| | | | 4 | 5 | 6 | | 8 | 9 | 10 | |
| Versuchs-Nr. | Gemisch-NH-Zahl (mg KOH/g) | (g) (g NCO) | (Mol) | (Mol)-Diff. | Σ(Mol) | TDA-Gehalt (Gew.-%) | (Mol) TDA | (Mol)-Diff. | Σ(Mol) | Viskosität (25°C) (mPa.s) |
|---|---|---|---|---|---|---|---|---|---|---|
| 2/6 | 37,6 | 2,0 0,98 | 0,02353 | | 0,05411 | 0,073 | 0,000598 | | 0,004181 | 21 000 |
| | | | | 0,03529 | | | | – | | |
| 2/7 | 20,5 | 5,0 2,45 | 0,05882 | | 0,11293 | – | – | | – | 53 000 |
| | | | | 0,05882 | | | | – | | |
| 2/8 | 2,89 | 10,0 4,9 | 0,11765 | | 0,23058 | – | – | | – | 250 000 |

EP 0 178 525 B1

Tabelle 3  Umsetzung von Aminopolyether III (der NH-Zahl 48,75) mit Hexamethylendiisocyanat (HDI)

Beispiel 3

Spalte

| 1 | 2 | 3 | 4 | 5 | 6 | 7 | 8 | 9 | 10 | 11 |
|---|---|---|---|---|---|---|---|---|---|---|
| Versuchs-Nr. | Gemisch-NH-Zahl (mg KOH/g) | Zugabe an (g) (g NCO) | HDI (MG: 168) (Mol) $10^{-3}$ | (Mol)- Diff. $10^{-3}$ | Σ (Mol) | TDA-Gehalt (%) (%) | TDA (Mol) $10^{-2}$ | Abnahme an TDA / TDA (Mol) Diff.$10^{-2}$ | TDA Σ(Mol) $10^{-2}$ | Viskosität (25°C) (mPa.s) |
| 3/1 | 48,75 | – | – | | | 0,819 | 0,6713 | | – | 15 000 |
| | | | | 0,5952 | | | | 0,0279  0,0565[1] | | |
| 3/2 | 48,32 | 0,1  0,05 | 0,5952 | | 0,5952 | 0,785  0,750[1] | 0,6434  0,61475[1] | | 0,0279  0,0665[1] | 15 000  17 500[1] |
| | | | | 0,5952 | | | | 0,0475  0,0312[1] | | |
| 3/3 | 47,61 | 0,2  0,1 | 1,1905 | | 1,7857 | 0,727  0,712[1] | 0,5959  0,5836[1] | | 0,0754  0,0877[1] | 16 000  19 000[1] |
| | | | | 1,1905 | | | | 0,0262  0,0558[1] | | |
| 3/4 | 46,89 | 0,4  0,2 | 2,3809 | | 4,1666 | 0,695  0,644[1] | 0,5697  0,5278[1] | | 0,1016  0,1435[1] | 16 000  22 300[1] |
| | | | | 1,1905 | | | | 0,1336  0,0745[1] | | |

1) Diese Werte wurden nach einer Standzeit von 1 Woche zusätzlich gemessen

Tabelle 3  Umsetzung von Aminopolyether III (der NH-Zahl 48,75) mit Hexamethylendiisocyanat (HDI)

Beispiel 3 (Fortsetzung)

Spalte

| 1 | 2 | 3 | 4 | 5 | 6 | 7 | 8 | 9 | 10 | 11 |
|---|---|---|---|---|---|---|---|---|---|---|
| Versuchs-Nr. | Gemisch-NH-Zahl (mg KOH/ g) | Zugabe an (g) (g NCO) | HDI (MG: 168) (Mol) $10^{-3}$ | (Mol)- Diff. $10^{-3}$ | Σ (Mol) | TDA-Gehalt (%) (%) | TDA (Mol) $10^{-2}$ | Abnahme an TDA — TDA (Mol) Diff. $10^{-2}$ | TDA Σ (Mol) $10^{-2}$ | Viskosität (25°C) (mPa.s) |
| 3/5 | 45,73 | 0,6 | 3,5713 |  | 7,7379 | 0,532 | 0,4361 |  | 0,2352 | 20 000 |
|  |  | 0,3 |  |  |  | 0,553 [1] | 0,4533 [1] |  | 0,2180 [1] | 28 000 [1] |
|  |  |  |  | 2,3809 |  |  |  | 0,1353 0,1451 [1] |  |  |
| 3/6 | 44,52 | 1 | 5,9523 |  | 13,6902 | 0,367 | 0,3008 |  | 0,3705 | 23 000 |
|  |  | 0,5 |  |  |  | 0,376 [1] | 0,3082 [1] |  | 0,3631 [1] | 45 000 [1] |
|  |  |  |  | 8,9284 |  |  |  | 0,2401 0,2320 [1] |  |  |
| 3/7 | 34,32 | 2,5 | 14,8807 |  | 28,5709 | 0,074 | 0,0607 |  | 0,6106 | 110 000 |
|  |  | 1,25 |  |  |  | 0,093 [1] | 0,0762 [1] |  | 0,5951 [1] | 145 000 [1] |
|  |  |  |  | 14,8807 |  |  |  | — 0,0557 [1] |  |  |
| 3/8 | 20 | 5 | 29,7615 |  | 58,3324 | — | — |  | 0,6106 | — |
|  |  | 2,5 |  |  |  | 0,025 [1] | 0,0205 [1] |  | 0,6508 [1] |  |

EP 0 178 525 B1

Tabelle 4  Auswertung von Beispiel 1

| Beispiel-Nr. | 1/1 | 1/2 | 1/3 | 1/4 | 1/5 | 1/6 | 1/7 |
|---|---|---|---|---|---|---|---|
| Ausgangs-NH-Zahl (mg KOH/g) | 49,15 | 49,15 | 49,15 | 49,15 | 49,15 | 49,15 | 49,15 |
| NH-Zahl durch TDA (rechn.) (mg KOH/g) | 11 | 11 | 11 | 11 | 11 | 11 | 11 |
| NH-Zahl (rechn.) nach Abzug des TDA-Anteils (mg KOH/g) | 38,15 | 38,15 | 38,15 | 38,15 | 38,15 | 38,15 | 38,15 |
| NH-Zahl (rechn.) nach Isocyanat-Zusatz bei vollständiger Reaktion | (49,15) | 48,17 | 45,84 | 41,32 | 32,27 | 14,18 | – |
| gefundene NH-Zahl (mg KOH/g) | (49,15) | 48,4 | 43,5 | 41,3 | 32,2 | 13,64 | 11,2 |
| Anteil Polyetheramin an der gef. NH-Zahl (mg KOH/g) | 38,15 | 39,9 | 39,7 | 38,3 | 31,8 | 13,6 | 11,2 |
| Anteil Polyetheramin an der gef. NH-Zahl in % | 77,6 | 82,4 | 91,2 | 92,8 | 98,7 | 100 | 100 |
| Anteil TDA an der gef. NH-Zahl (mg KOH/g) | 11 | 8,5 | 3,8 | 3,0 | 0,44 | – | – |
| Anteil TDA an der gef. NH-Zahl in % | 22,4 | 17,6 | 8,8 | 7,2 | 1,30 | – | – |

Tabelle 5  Auswertung von Beispiel 2

| Beispiel Nr. | 2/1 | 2/2 | 2/3 | 2/4 | 2/5 | 2/6 | 2/7 | 2/8 |
|---|---|---|---|---|---|---|---|---|
| Ausgangs-NH-Zahl (mg KOH/g) | 47,28 | 47,28 | 47,28 | 47,28 | 47,28 | 47,28 | 47,28 | 47,28 |
| NH-Zahl durch TDA (rechn.) (mg KOH/g) | 4,4 | 4,4 | 4,4 | 4,4 | 4,4 | 4,4 | 4,4 | 4,4 |
| NH-Zahl (rechn.) nach Abzug des TDA-Anteils (mg KOH/g) | 42,88 | 42,88 | 42,88 | 42,88 | 42,88 | 42,88 | 42,88 | 42,88 |
| NH-Zahl (rechn.) nach Isocyanat-Zusatz bei vollständiger Reaktion (mg KOH/g) | 47,28 | 46,63 | 45,34 | 42,76 | 38,89 | 32,43 | 16,29 | – |
| gefundene NH-Zahl (mg KOH/g) | 47,28 | 45,9 | 44,28 | 43,7 | 41,9 | 37,6 | 20,5 | 2,89 |
| Anteil Polyetheramin an der gef. NH-Zahl (mg KOH/g) | 42,88 | 42,1 | 40,94 | 41,4 | 40,46 | 37,05 | 20,5 | 2,89 |
| Anteil Polyetheramin an der gef. NH-Zahl in % | 90,7 | 91,6 | 92,5 | 94,7 | 96,6 | 98,5 | 100 | 100 |
| Anteil TDA an der gef. NH-Zahl (mg KOH/g) | 4,4 | 3,8 | 3,34 | 2,30 | 1,44 | 0,55 | – | – |
| Anteil TDA an der gef. NH-Zahl in % | 9,3 | 8,4 | 7,5 | 5,3 | 3,4 | 1,5 | – | – |

EP 0 178 525 B1

Tabelle 6  Auswertung von Beispiel 3

| Beispiel-Nr. | 3/1 | 3/2 | 3/3 | 3/4 | 3/5 | 3/6 | 3/7 | 3/8 |
|---|---|---|---|---|---|---|---|---|
| Ausgangs-NH-Zahl (mg KOH/g) | 48,75 | 48,75 | 48,75 | 48,75 | 48,75 | 48,75 | 48,75 | 48,75 |
| NH-Zahl durch TDA (rechn.) (mg KOH/g) | 7,5 | 7,5 | 7,5 | 7,5 | 7,5 | 7,5 | 7,5 | 7,5 |
| NH-Zahl (rechn.) nach Abzug des TDA-Anteils (mg KOH/g) | 41,25 | 41,25 | 41,25 | 41,25 | 41,25 | 41,25 | 41,25 | 41,25 |
| NH-Zahl nach Isocyanat-Zusatz bei vollständiger Reaktion (mg KOH/g) | 48,75 | 48,58 | 48,25 | 47,58 | 46,58 | 44,91 | 40,75 | 32,41 |
| gefundene NH-Zahl (mg KOH/g) | 48,75 | 48,32 | 47,61 | 46,89 | 45,73 | 44,52 | 34,32 | 20 |
| Anteil Polyetheramin an der gef. NH-Zahl (mg KOH/g) | 41,25 | 41,11 / 41,44 | 40,94 / 41,08 | 40,51 / 40,98 | 40,85 / 40,66 | 41,15 / 41,07 | 33,64 / 33,47 | – / 20 |
| Anteil Polyetheramin an der gef. NH-Zahl in % | 84,6 | 85,1 / 85,8 | 86,0 / 86,3 | 86,4 / 87,4 | 89,3 / 88,9 | 92,4 / 92,3 | 98,0 / 97,5 | – / 100 |
| Anteil TDA an der gef. NH-Zahl (mg KOH/g) | 7,5 | 7,21 / 6,88 | 6,67 / 6,53 | 6,38 / 5,91 | 4,88 / 5,07 | 3,37 / 3,45 | 0,68 / 0,85 | – / 0,23 |
| Anteil TDA an der gef. NH-Zahl in % | 15,4 | 14,9 / 14,2 | 14,0 / 13,7 | 13,6 / 12,6 | 10,7 / 11,1 | 7,6 / 7,7 | 2,0 / 2,5 | – / – |

EP 0 178 525 B1

# EP 0 178 525 B1

## Beispiel 4

Zu 438,4 g eines Aminopolyethers der NH-Zahl 80,4, einer Viskosität von 127 Pas (25°C) und eines TDA-Gehalts von 0,148% werden 1,75 g n-Propylisocyanat bei 23°C tropfenweise unter Rühren zugegeben. Das so modifizierte Produkt weise einen TDA-Gehalt von 0,093% und eine NH-Zahl von 77,4 auf.

Der Aminopolyether wurde wie folgt hergestellt: 1 Mol eines linearen Polypropylenetherglykols der OH-Zahl 112 und 2 Mol Toluylen-2,4-diisocyanat werden durch 4-stündiges Erhitzen auf 80°C in ein NCO-Prepolymer (6,01% NCO) überführt. Das 45°C warme NCO-Produkt wird unter intensivem Rühren so zu einer gekühlten Lösung von 162,4 g Kaliumhydroxid und 800 ml Wasser gegeben (NCO:OH$^{\ominus}$-Verhältnis = 1:1,45), daß eine Innentemperatur von 25°C nicht überschritten wird. 30 Minuten wird bei dieser Temperatur weitergerührt und dann 2 Stunden zum Rückfluß erhitzt. Nach 30-minütigem Stehen wird die untere, waßrige Salzlösung aus dem zweiphasigen Reaktionsgemisch abgetrennt und verworfen. Die obere Phase wird bei 20 mbar/80°C und dann bei 1 mbar/100°C von Wasserresten befreit. Durch Absaugen des 60°C warmen Produkts über eine Drucknutsche (3 bar Überdruck) werden geringe Reste Salz abgetrennt und das Polyetheramin (NH-Zahl 80,4) isoliert.

## Beispiel 5

Herstellung des erfindungsgemäß modifizierten Aminopolyethers

100 Gew.-Teile eines aromatischen Aminopolyethers auf Basis eines Polyoxypropylenetherdiols (Molekulargewicht 2000)/Toluol-2,4-diisocyanat (Molverhältnis 1:2), hergestellt nach dem Verfahren gemäß DE—OS 2 948 419), mit einer Aminzahl von 48,8 mg KOH/g werden.

a) mit 0,97 bzw.

b) 1,94 Gew.-Teilen 3-Isocyanatomethyl-3,5,5-trimethylcyclohexylisocyanat (IPDI) bei Raumtemperatur verrührt, 2 h auf 90°C erhitzt und anschließend entgast. Es resultieren jeweils Aminopolyether mit erhöhter Viskosität und verringertem Gehalt an freiem TDA (Bestimmung durch HPLC), Daten siehe untenstehende Tabelle.

Verwendung:

a) In dem mit 0,97 Teilen IPDI erfindungsgemäß modifizierten Aminopolyether werden 0,1 Teile 3,3'-Dimethyl-4,4'-diaminodicyclohexylmethan gelöst und 15,46 Teile feinteiliges dimeres 2,4-Diisocyanatotoluol (TT) suspendiert. Nach dem Eingießen in eine mit Silikontrennmittel versehene Metallform und 16-stündigem Ausheizen und Tempern bei 120°C entsteht ein Elastomer mit den in untenstehender Tabelle angegebenen mechanischen Eigenschaften.

b) In dem mit 1,94 Teilen IPDI modifizierten Aminopolyether werden 0,15 Teile 3,3'-Dimethyl-4,4'-diaminodicyclohexylmethan gelöst und 15,15 Teile 4,4'-Dimethyl-3,3'-diisocyanatodiphenylharnstoff, enthaltend 24,5% NCO (TDIH), suspendiert. Aus dieser Gießmasse wird nach oben geschilderter Methode ein Elastomer mit den in untenstehender Tabelle angegebenen mechanischen Eigenschaften hergestellt.

aV) Vergleich mit nicht erfindungsgemäß modifiziertem Aminopolyether.

Ein Vergleichselastomer wird aus 100 Teilen des nicht mit Isocyanat modifizierten Aminopolyethers, 0,1 Teilen 3,3'-Dimethyl-4,4'-diaminodicyclohexylmethan und 16,6 Teilen dimerem 2,4-Diisocyanatotoluol (TT) nach obengenannter Methode hergestellt.

Die Viskositäten und die Gehalte an freiem TDA der modifizierten Aminopolyether sowie die mechanischen Eigenschaften der mit dem nicht modifizierten und mit den erfindungsgemäß modifizierten Aminopolyethern hergestellten Polyurethan-Polyharnstoff-Elastomeren sind in der folgenden Tabelle zusammengestellt:

17

## Tabelle 7

|  | a) | aV) | b) |
|---|---|---|---|
| aromatischer Aminopolyether | 100 Tl. | 100 Tl. | 100 Tl. |
| IPDI zur Modifizierung | 0,97 Tl. | - | 1,94 Tl. |
| Viskosität bei 22°C (Pa.s) | 24 | 10 | 32 |
| Gehalt an freiem TDA (%) | 0,45 | 0,90 | 0,20 |
| 3,3'-Dimethyl-4,4'-diamino-dicyclohexylmethan (g) | 0,1 | 0,1 | 0,15 |
| TT (Kennzahl 1,1) (g) | 15,46 | 16,6 | - |
| TDIH (Kennzahl 1,25) (g) | - | - | 15,15 |
| Zugfestigkeit (MPa) (DIN 53 504) | 13 | 16 | 14 |
| Reißdehnung (%) (DIN 53 504) | 500 | 600 | 400 |
| Weiterreißfestigkeit (kN/m) (DIN 53 515) | 36 | 34 | 30 |
| Shore-A-Härte (DIN 53 505) | 93 | 92 | 93,5 |
| Elastizität (%) (DIN 53 512) | 50 | 49 | 50 |

TDIH =

Die erfindungsgemäß mit IPDI modifizierten Aminopolyether zeigen eine erheblich verminderte Tendenz zur Verfärbung bei Lagerung, insbesondere unter Lichteinfluß. Auch die mit den erfindungsgemäß modifizierten Aminopolyethern hergestellten Polyurethanharnstoffe zeigen eine verminderte Tendenz zur Verfärbung am Licht im Vergleich gegenüber den monomeres TDA enthaltenden, unmodifizierten Aminopolyethern bzw. ihren Umsetzungsprodukten.

**Patentansprüche**

1. Verfahren zur Herstellung von höhermolekularen Aminoverbindungen, welche frei von niedermolekularen Aminoverbindungen oder in ihrem Gehalt daran stark reduziert sind, dadurch gekennzeichnet, daß man Gemische aus

a) höhermolekularen Aminoverbindungen mit endständigen aromatischen und/oder aliphatischen Aminogruppen, mit Molekulargewichten von 400 bis 12 000, und

b) darin als Nebenprodukt oder Verunreinigung in geringen Mengen enthaltenen niedermolekularen Aminoverbindungen mit Molekulargewichten unter 400 mit

c) Mono-, Di- und/oder Polyisocyanaten in einer solchen Menge umsetzt, daß für jedes Äquivalent an niedermolekularer Aminoverbindung b) 0.5 bis 5 Äquivalente an Isocyanaten c) eingesetzt werden.

2. Verfahren nach Anspruch 1, dadurch gekennzeichnet, daß man als · höhermolekulare Aminovrbindungen a) di- und/oder·höherfunktionelle Aminoverbindungen mit endständigen aromatischen primären Aminogruppen einsetzt.

3. Verfahren nach Ansprüchen 1 und 2, dadurch gekennzeichnet, daß man als höhermolekulare Aminoverbindungen a) höhermolekulare Aminopolyether oder Aminopolyester mit aromatischen Endgruppen und mit Molekulargewichten von 600 bis 6000 einsetzt, die durch alkalische Hydrolyse von NCO-Polyether- oder -Polyesterprepolymeren erhalten wurden.

18

## EP 0 178 525 B1

4. Verfahren nach Ansprüchen 1 bis 3, dadurch gekennzeichnet, daß man (cyclo)aliphatische Mono- und/oder Diisocyanate c) einsetzt.

5. Verfahren nach Ansprüchen 1 bis 4, dadurch gekennzeichnet, daß man als Isocyanate c) (cyclo)aliphatische Mono- und Diisocyanate mit an sekundäre oder tertiäre C-Atome gebundenen NCO-Gruppen einsetzt.

6. Verfahren nach Ansprüchen 1 bis 5, dadurch gekennzeichnet, daß man die Isocyanate c) in einer solchen Menge umsetzt, daß für jedes Äquivalent an niedermolekularer Aminoverbindung b) 0,8 bis 5 Äquivalente an Isocyanat c) eingesetzt wird.

7. Verfahren nach Ansprüchen 1 bis 6, dadurch gekennzeichnet, daß man 0,95 — 1,1 Äquivalente c) pro Äquivalente b) einsetzt.

8. Verfahren nach Ansprüchen 1 bis 7, dadurch gekennzeichnet, daß man höhermolekulare Polyaminoverbindungen a) mit einem Gehalt an 2,4-Toluylendiamin b) mit den Isocyanaten c) umsetzt.

9. Verwendung der nach dem Verfahren der Ansprüche 1 bis 8 erhaltenen höhermolekularen Polyamine als alleinige oder anteilige höhermolekulare Verbindungen zusammen mit Di- bzw. Polyisocyanaten, gegebenenfalls unter Mitverwendung von niedermolekularen Kettenverlängerungsmitteln und/oder Vernetzern mit Molekulargewichten von 18, 32 und/oder 60 bis 399 und gegebenenfalls unter Zusatz üblicher Hilfs- und Zusatzstoffe zur Herstellung von gegebenenfalls zelligen Polyurethankunststoffen oder PU-Schaumstoffen nach an sich bekannten Verfahren.

10. Verwendung nach Anspruch 9, dadurch gekennzeichnet, daß man die höhermolekularen Polyamine in Einkomponenten-Reaktivsystemen unter Verwendung von festen Diisocyanaten bzw. Diisocyanaten mit retardierter Reaktivität.

**Revendications**

1. Procédé de production de composés aminés de poids moléculaire élevé, qui sont dépourvus de composés aminés de bas poids moléculaire ou dont la teneur en ces composés est fortement réduite, caractérisé en ce qu'on fait réagir des mélanges

a) de composés aminés de poids moléculaire élevé portant des groupes amino aromatiques et/ou aliphatiques terminaux, ayant des poids moléculaires de 400 à 12 000, et

b) des composés aminés de bas poids moléculaire, qui y sont contenus en faibles quantités comme sous-produit ou comme impureté, avec des poids moléculaires inférieurs à 400, avec

c) des mono-isocyanates, des diisocyanates et/ou des polyisocyanates en une quantité telle qu'on utilise pour chaque équivalent de compose aminé b) de bas poids moléculaire, 0,5 à 5 équivalents d'isocyanates c).

2. Procédé suivant la revendication 1, caractérisé en ce qu'on utilise comme composés aminés a) de poids moléculaire élevé, des composés aminés de fonctionnalité égale et/ou supérieure à deux, portant des groupes amino primaires aromatiques terminaux.

3. Procédé suivant les revendications 1 et 2, caractérisé en ce qu'on utilise comme composés aminés a) de poids moléculaire élevé des aminopolyéthers ou des aminopolyesters de poids moléculaire élevé portant des groupes terminaux aromatiques et ayant des poids moléculaires de 600 à 6000, qui ont été obtenus par hydrolyse alcaline de NCO-polyéther- ou -polyesterprépolymères.

4. Procédé suivant les revendications 1 à 3, caractérisé en ce qu'on utilise des mono- et/ou des diisocyanates c) (cyclo)aliphatiques.

5. Procédé suivant les revendications 1 à 4, caractérisé en ce qu'on utilise comme isocyanates c) des monoisocyanates et des diisocyanates (cyclo)aliphatiques portant des groupes NCO liés à des atomes de carbone secondaires ou tertiaires.

6. Procédé suivant les revendications 1 à 5, caractérisé en ce qu'on fait réagir les isocyanates c) en une quantité telle qu'on utilise, pour chaque équivalent de composé aminé b) de bas poids moléculaire, 0,8 à 5 équivalents d'isocyanate c).

7. Procédé suivant les revendications 1 à 6, caractérisé en ce qu'on utilise 0,95 à 1,1 équivalent de c) par équivalent de b).

8. Procédé suivant les revendications 1 à 7, caractérisé en ce qu'on fait réagir avec les isocyanates c) des composés polyaminés a) de poids moléculaire élevé, avec une teneur en 2,4-diaminotoluène b).

9. Utilisation des polyamines de poids moléculaire élevé obtenues par le procédé suivant les revendications 1 à 8 comme seuls composés de poids moléculaire élevé ou comme portions de ces composés conjointement avec des diisocyanates ou des polyisocyanates, le cas échéant en utilisant des agents d'allongement de chaîne et/ou des agents de réticulation de bas poids moléculaire, présentant des poids moléculaires de 18, 32 et/ou 60 à 399, et le cas échéant avec adjonction de substances auxiliaires et d'additifs classiques, pour la production de matières plastiques du type polyuréthanne éventuellement cellulaires ou de mousses de polyuréthanne par des procédés connus.

10. Utilisation suivant la revendication 9, caractérisé en ce qu'on incorpore les polyamines de poids moléculaire élevé dans des systèmes réactifs à un composant en utilisant des diisocyanates solides ou diisocyanates à réactivité retardée.

**Claims**

1. Process for the preparation of relatively high molecular weight amino compounds which are free from low molecular weight amino compounds or greatly reduced in their content of the latter, characterised in that mixtures of

a) relatively high molecular weight amino compounds containing terminal aromatic and/or aliphatic amino groups and having molecular weights of from 400 to 12,000 and

b) low molecular weight amino compounds with molecular weights below 400 contained therein in small quantities as by-product or impurity are reacted with

c) mono-, di- and/or polyisocyanates in such a quantity that from 0.5 to 5 equivalents of isocyanates c) are used for each equivalent of low molecular weight amino compound b).

2. Process according to Claim 1, characterised in that the relatively high molecular weight amino compounds a) used are difunctional and/or higher functional amino compounds having terminal aromatic primary amino groups.

3. Process according to Claims 1 and 2, characterised in that the relatively high molecular weight amino compounds a) used are relatively high molecular weight aminopolyethers or aminopolyesters containing aromatic end groups and having molecular weights of from 600 to 6000, which compounds were obtained by alkaline hydrolysis of NCO-polyether prepolymers of NCO-polyester prepolymers.

4. Process according to Claims 1 to 3, characterised in that (cyclo)aliphatic mono- and/or diisocyanates c) are used.

5. Process according to Claims 1 to 4, characterised in that the isocyanates c) used are (cyclo)aliphatic mono and diisocyanates containing isocyanate groups attached to secondary to tertiary carbon atoms.

6. Process according to Claims 1 to 5, characterised in that the isocyanates c) are reacted in such a quantity that from 0.8 to 5 equivalents of isocyanate c) are used for each equivalent of low molecular weight amino compound b).

7. Process according to Claims 1 to 6, characterised in that from 0.95 to 1.1 equivalents of c) are used per equivalent of b).

8. Process according to Claims 1 to 7, characterised in that relatively high molecular weight polyamino compounds a) containing 2,4-tolylenediamine b) are reacted with the isocyanates c).

9. Use of relatively high molecular weight polyamines obtained by the process according to Claims 1 to 8 as all or part of the relatively high molecular weight compounds together with di- or polyisocyanates, optionally with the addition of low molecular weight chain lengthening agents and/or cross-linking agents having molecular weights of 18, 32 and/or 60 to 399 and optionally with the addition of conventional auxiliary agents and additives, for the preparation of optionally cellular polyurethane resins or PU foams by processes known per se.

10. Use according to Claim 9, characterised in that the relatively high molecular weight polyamines are used in one-component reactive systems using solid diisocyanates or diisocyanates with retarded reactivity.